# EUROPEAN PATENT APPLICATION

(11) **EP 4 318 154 A1**
(43) Date of publication of application: **07.02.2024**
(21) Application number: 21933003.2
(22) Date of filing: 24.03.2021
(51) Int. Cl.: G05B 23/02, G01M 99/00, F24F 11/38

(54) **DIAGNOSTIC DEVICE AND DIAGNOSTIC METHOD**

(71) Applicant: MITSUBISHI ELECTRIC CORPORATION, Chiyoda-ku Tokyo 100-8310 (JP)
(72) Inventor: WADA, Makoto, Tokyo 100-8310 (JP); OCHIAI, Yasutaka, Tokyo 100-8310 (JP); KURIYAMA, Toshiyuki, Tokyo 100-8310 (JP); NAKATA, Masanori, Tokyo 100-8310 (JP)
(74) Representative: Studio Torta S.p.A.
(86) International application number: PCT/JP2021/012379
(87) International publication number: WO 2022/201393

(57) **Abstract**

A normalization unit (102) acquires a normalized reference value being a value obtained from normalization of a reference value according to a predetermined normalization rule, the reference value being a status value acquired from an air conditioner (200) during a normal estimation period during which the air conditioner (200) is estimated to operate normally, the status value indicating an operational status of the air conditioner (200). An acquiring unit (101) acquires from the air conditioner (200), the status value as a diagnosis value during a diagnosis period during which it is not clear whether or not the air conditioner (200) operates normally and which is after the normal estimation period. The normalization unit (102) normalizes the diagnosis value according to the normalization rule. A diagnosis unit (104) diagnoses the operational status of the air conditioner (200) during the diagnosis period, using the normalized reference value and a normalized diagnosis value obtained from the normalization of the diagnosis value by the normalization unit (102).

## Description

### Technical Field

The present disclosure relates to a technique to diagnose an operational status of a device.

### Background Art

There is a technique described in Patent Literature 1, as a technique to diagnose an operational status of a device. The technique of Patent Literature 1 regards a predetermined period after an air conditioner is installed, as a period during which the air conditioner is normal, and stores a set of status values during the period, as a normal operational status. A status value is a value relating to a status of the air conditioner, and is, for example, a value indicated by a sensor that detects the status of the air conditioner, or a value that sets control details for the air conditioner.

Then, the technique of Patent Literature 1 compares the set of status values of the air conditioner acquired for diagnosis with the normal operational status. Then, the technique of Patent Literature 1 performs, for example, an F test or a t test, and determines that the air conditioner is abnormal when there is a significant difference between the two.

### Citation List

### Patent Literature

Patent Literature 1: JP 4281334 B2

### Summary of Invention

### Technical Problem

The technique of Patent Literature 1 can detect that the device is abnormal. However, according to the technique of Patent Literature 1, when it is detected that the device is abnormal, operation of the device needs to stop for repair or the like of the device. Further, since the device is already abnormal, it may take a long time for the repair or the like.

In order to continue to provide a user of the device with safety, security, comfort, convenience, and the like, the fact that the operational status of the device is changing needs to be detected at a stage before the device results in an abnormality, that is, a transitional stage (an intermediate stage between normal and abnormal) during which a transition is made from normal to abnormal. Then, when the operational status of the device is changing, it is desirable to perform appropriate maintenance and to avoid the device from stopping the operation.

The technique of Patent Literature 1 has a problem of being unable to detect a change in the operational status of the device at the stage before the device results in the abnormality.

One of main purposes of the present disclosure is to solve a problem such as above. More specifically, the present disclosure mainly aims to detect a change in an operational status of a device at a stage before the device results in an abnormality.

### Solution to Problem

A diagnosis apparatus according to the present disclosure includes:
a normalized reference value acquiring unit to acquire a normalized reference value being a value obtained from normalization of a reference value according to a predetermined normalization rule, the reference value being a status value acquired from a device during a normal estimation period during which the device is estimated to operate normally, the status value indicating an operational status of the device;
a diagnosis value acquiring unit to acquire from the device, the status value as a diagnosis value during a diagnosis period during which it is not clear whether or not the device operates normally and which is after the normal estimation period;
a diagnosis value normalization unit to normalize the diagnosis value according to the normalization rule; and
a diagnosis unit to diagnose the operational status of the device during the diagnosis period, using the normalized reference value and a normalized diagnosis value obtained from the normalization of the diagnosis value by the diagnosis value normalization unit.

### Advantageous Effects of Invention

According to the present disclosure, normalization makes it possible to detect a change in an operational status of a device at a stage before the device results in an abnormality.

### Brief Description of Drawings

Fig. 1 is a diagram illustrating a configuration example of a diagnosis system according to Embodiment 1.
Fig. 2 is a diagram illustrating a hardware configuration example of a diagnosis apparatus according to Embodiment 1.
Fig. 3 is a flowchart illustrating an operational example of the diagnosis apparatus during a normal estimation period according to Embodiment 1.
Fig. 4 is a flowchart illustrating an operational example of the diagnosis apparatus during a diagnosis period according to Embodiment 1.
Fig. 5 is a diagram illustrating an example of a histogram of normalized reference values (Pd) and an example of a histogram of normalized diagnosis values (Pd) according to Embodiment 1.
Fig. 6 is a diagram illustrating examples of diagnosis result notification messages according to Embodiment 1.
Fig. 7 is a diagram describing a procedure of normalization according to Embodiment 1.
Fig. 8 is a diagram describing the procedure of the normalization according to Embodiment 1.
Fig. 9 is a diagram illustrating an example of a p-h diagram according to Embodiment 1.
Fig. 10 is a diagram illustrating examples of upper limit value-of-status values and lower limit value-of-status values according to Embodiment 1.
Fig. 11 is a diagram illustrating examples of the upper limit value-of-status values and the lower limit value-of-status values according to Embodiment 1.
Fig. 12 is a flowchart illustrating an operational example of the diagnosis apparatus during the normal estimation period according to Embodiment 2.
Fig. 13 is a flowchart illustrating an operational example of the diagnosis apparatus during the diagnosis period according to Embodiment 2.
Fig. 14 is a diagram illustrating an example of a histogram of normalized reference values (Pd) for each operational environment and an example of a histogram of normalized diagnosis values (Pd) for which the operational environment is set according to Embodiment 2.
Fig. 15 is a diagram illustrating a configuration example of the diagnosis system according to Embodiment 3.
Fig. 16 is a diagram describing a procedure of correction according to Embodiment 3.

### Description of Embodiments

Embodiments will be described hereinafter with reference to the drawings. In the following description of the embodiments and the drawings, portions denoted by the same reference signs indicate the same or corresponding portions.

### Embodiment 1.

### *** Description of Configuration ***

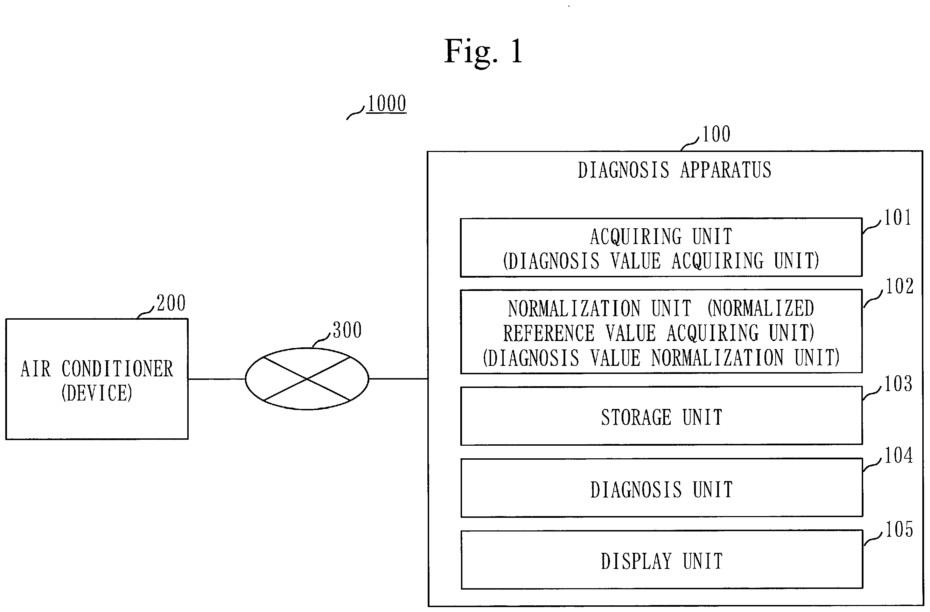

Fig. 1 illustrate a configuration example of a diagnosis system 1000 according to the present embodiment.

The diagnosis system 1000 according to the present embodiment is configured with a diagnosis apparatus 100 and an air conditioner 200. The diagnosis apparatus 100 and the air conditioner 200 are connected by a network 300. The network 300 may be a wired network or a wireless network.

A plurality of types of sensors are arranged in the air conditioner 200.

Each of the plurality of types of sensors measures a status value. The status value is a value indicating an operational status of the air conditioner 200. The operational status of the air conditioner 200 is, for example, a refrigerant status, a load status, or the like.

The status value is a concept that includes a reference value and a diagnosis value to be described below. That is, the status value measured during a normal estimation period to be described below is the reference value, and the status value measured during a diagnosis period to be described below is the diagnosis value.

The air conditioner 200 transmits to the diagnosis apparatus 100, a plurality of types of status values measured by the plurality of types of sensors.

In the present embodiment, it is assumed that as the status values, for example, Pd: a discharge pressure-of-refrigerant, Ps: a suction pressure-of-refrigerant, Td: a discharge temperature-of-refrigerant, Ts: a suction temperature-of-refrigerant, Tl: an outlet liquid temperature-of-condenser, To: an intake air temperature-of-condenser, Ti: an intake air temperature-of-evaporator, and f: a frequency-of-compressor, are measured.

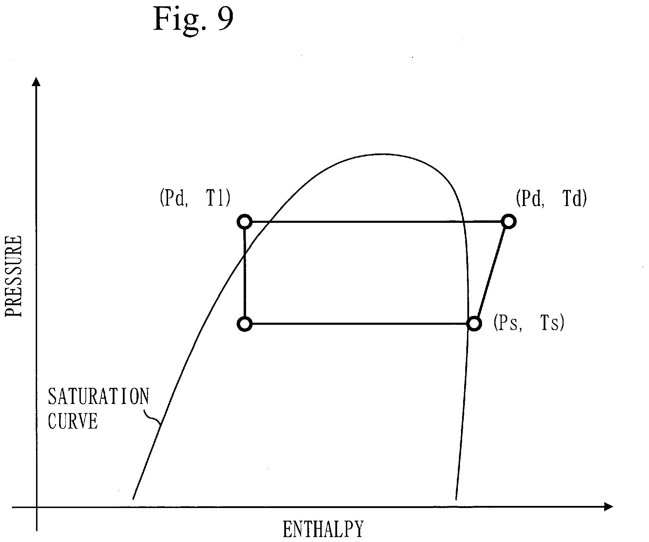

Pd, Ps, Td, Ts, and Tl are basic physical quantities that constitute a p-h diagram (Fig. 9) which is often used for representing a refrigerant status. Further, To, Ti, and f (correspond to load) are physical quantities representing an environmental condition.

The present embodiment will be described under an assumption that the air conditioner 200 collectively transmits to the diagnosis apparatus 100, the plurality of types of status values measured by the plurality of types of sensors. However, each sensor may individually transmit the status value to the diagnosis apparatus 100.

The air conditioner 200 is an example of a device.

The diagnosis apparatus 100 acquires the plurality of types of status values from the air conditioner 200, and normalizes each of the acquired plurality of types of status values. Then, the diagnosis apparatus 100 diagnoses the operational status of the air conditioner 200, using the normalized plurality of types of status values.

"To acquire the plurality of types of status values from the air conditioner 200" includes a case where the diagnosis apparatus 100 acquires the status value from each sensor.

As illustrated in Fig. 1, the diagnosis apparatus 100 includes an acquiring unit 101, a normalization unit 102, a storage unit 103, a diagnosis unit 104, and a display unit 105, as functional configurations.

Details of the acquiring unit 101, the normalization unit 102, the storage unit 103, the diagnosis unit 104, and the display unit 105 will be described below.

An operational procedure of the diagnosis apparatus 100 is equivalent to a diagnosis method.

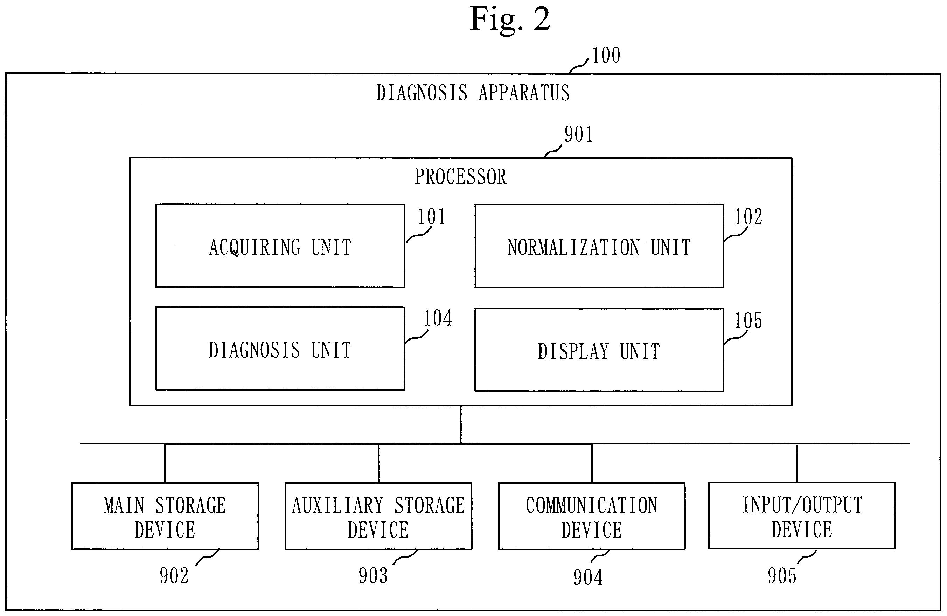

Fig. 2 illustrates a hardware configuration example of the diagnosis apparatus 100 illustrated in Fig. 1.

The diagnosis apparatus 100 is a computer.

The diagnosis apparatus 100 includes a processor 901, a main storage device 902, an auxiliary storage device 903, a communication device 904, and an input/output device 905, as pieces of hardware.

The auxiliary storage device 903 stores programs that implement functions of the acquiring unit 101, the normalization unit 102, the diagnosis unit 104, and the display unit 105 illustrated in Fig. 1.

These programs are loaded from the auxiliary storage device 903 into the main storage device 902. Then, the processor 901 executes these programs and performs operation of the acquiring unit 101, the normalization unit 102, the diagnosis unit 104, and the display unit 105 to be described below.

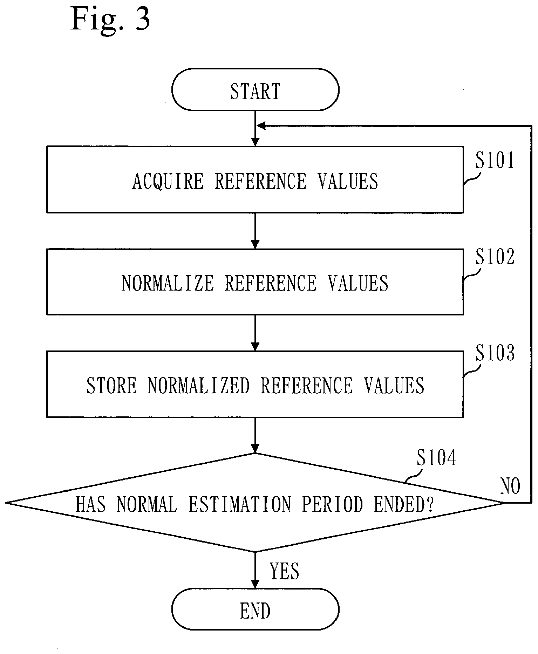

Fig. 3 schematically illustrates a state in which the processor 901 executes the programs that implement the functions of the acquiring unit 101, the normalization unit 102, the diagnosis unit 104, and the display unit 105.

The normalization unit 102 illustrated in Fig. 1 is implemented by the main storage device 902 or the auxiliary storage device 903.

The communication device 904 communicates with the air conditioner 200 via the network 300.

The input/output device 905 is, for example, a keyboard, a mouse, or a display device.

Next, details of the acquiring unit 101, the normalization unit 102, the storage unit 103, the diagnosis unit 104, and the display unit 105 illustrated in Fig. 1 will be described.

The acquiring unit 101 acquires (receives) the plurality of types of status values, using the communication device 904.

More specifically, the acquiring unit 101 acquires as a plurality of types of reference values, the plurality of types of status values of the air conditioner 200, during the normal estimation period. The normal estimation period is a period during which the air conditioner 200 is estimated to operate normally.

Further, the acquiring unit 101 acquires from the air conditioner 200 as a plurality of types of diagnosis values, the plurality of types of status values, during the diagnosis period. The diagnosis period is a period during which it is not clear whether or not the air conditioner 200 operates normally and which is after the normal estimation period.

The acquiring unit 101 is equivalent to a diagnosis value acquiring unit.

The normalization unit 102 normalizes the plurality of types of reference values acquired during the normal estimation period, according to a predetermined normalization rule. A value obtained from the normalization of the reference value is referred to as a normalized reference value.

Further, the normalization unit 102 normalizes the plurality of types of diagnosis values acquired during the diagnosis period, according to the normalization rule. A value obtained from the normalization of the diagnosis value is referred to as a normalized diagnosis value.

The normalization unit 102 is equivalent to a normalized reference value acquiring unit and a diagnosis value normalization unit.

The storage unit 103 stores a plurality of types of normalized reference values and a plurality of types of normalized diagnosis values.

Further, the storage unit 103 stores the normalization rule.

The diagnosis unit 104 diagnoses the operational status of the air conditioner 200 during the diagnosis period, using the normalized reference values and the normalized diagnosis values.

The display unit 105 displays on a display device, a diagnosis result notification message indicating a diagnosis result of the diagnosis unit 104.

### *** Description of Operation ***

Fig. 3 illustrate an operational example of the diagnosis apparatus 100 during the normal estimation period according to the present embodiment.

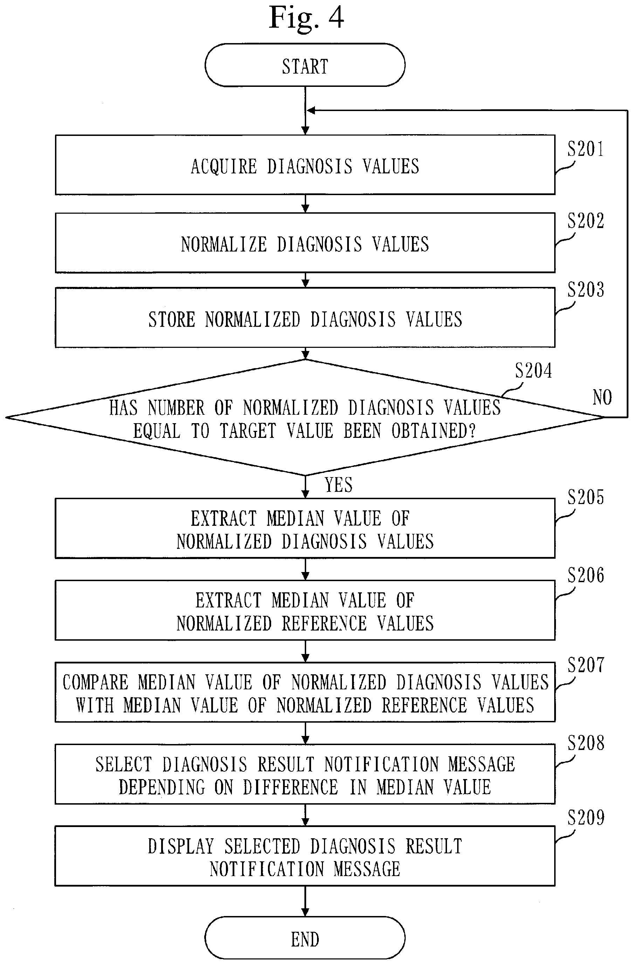

Fig. 4 illustrates an operational example of the diagnosis apparatus 100 during the diagnosis period according to the present embodiment.

First, the operational example of the diagnosis apparatus 100 during the normal estimation period will be described with reference to Fig. 3.

The flow of Fig. 3 is repeated at a predetermined execution cycle. The execution cycle is, for example, one minute.

First, the acquiring unit 101 acquires (receives) from the air conditioner 200, the plurality of types of status values as the reference values, within the normal estimation period (step S101). The acquiring unit 101 outputs the acquired reference values to the normalization unit 102.

The air conditioner 200 is in a transitional status immediately after startup and/or when a load changes, since a refrigerant status and/or an actuator status significantly fluctuates. It is desirable to avoid the normal estimation period from including a period of the transitional status such as above. That is, it is desirable that the normal estimation period is only a stable period during which the air conditioner 200 is stable. The stable period can be determined based on, for example, an elapsed time from the startup of the air conditioner 200 or a time during which the actuator status continuously remains unchanged.

Further, in step S101, as described above, the acquiring unit 101 acquires as the reference values, Pd, Ps, Td, Ts, T, To, Ti, and f. However, in the following, Pd will be mainly described for simplifying the description. The following description is applied also to the status values other than Pd.

Next, the normalization unit 102 normalizes each of the reference values acquired in step S101 according to the normalization rule (step S102).

As described above, the reference value normalized by the normalization unit 102 is the normalized reference value.

Details of the normalization will be described below.

Next, the normalization unit 102 stores the normalized reference values obtained in step S102 into the storage unit 103 (step S103).

Next, the acquiring unit 101 determines whether or not the normal estimation period has ended (step S104).

When the normal estimation period has ended, the flow of Fig. 3 ends.

On the other hand, when the normal estimation period has not ended, step S101 is performed again in a next execution cycle (for example, after one minute has elapsed).

The normal estimation period is, for example, one month from installation of the air conditioner 200. The normal estimation period may be any period during which the air conditioner 200 is estimated to operate normally.

When it is assumed that the execution cycle is one minute and the normal estimation period is thirty days, 43,200 pieces of reference values Pd are obtained (60 (minutes) × 24 (hours) × 30 (days) = 43,200 pieces). Similarly, 43,200 pieces are obtained for each of other reference values.

Next, the operational example of the diagnosis apparatus 100 during the diagnosis period will be described with reference to Fig. 4.

The operational flow of Fig. 4 begins with start of the diagnosis period. The diagnosis period is designated by, for example, a user of the diagnosis apparatus 100 via the input/output device 905.

First, the acquiring unit 101 acquires (receives) from the air conditioner 200, the plurality of types of status values as the diagnosis values (step S201). The acquiring unit 101 outputs the acquired diagnosis values to the normalization unit 102.

Next, the normalization unit 102 normalizes each of the diagnosis values acquired in step S201 according to the normalization rule (step S202).

As described above, the diagnosis value normalized by the normalization unit 102 is the normalized diagnosis value.

Details of the normalization will be described below.

Next, the normalization unit 102 stores the normalized diagnosis values obtained in step S202 into the storage unit 103 (step S203).

Next, the normalization unit 102 determines whether or not the number of normalized diagnosis values equal to a target number has been obtained (step S204).

When the number of normalized diagnosis values equal to the target number has been obtained, the process proceeds to step S205.

On the other hand, the number of normalized diagnosis values equal to the target number has not been obtained, step S201 is performed again in a next execution cycle (for example, after one minute has elapsed).

The target number may be, for example, the number of normalized diagnosis values in one day (60 × 24 = 1,440) or may be the number of normalized diagnosis values in 30 days (60 × 24 × 30 = 43,200). The target number can be arbitrarily decided by the user of the diagnosis apparatus 100.

When the number of normalized diagnosis values equal to the target number has been obtained (YES in step S204), the diagnosis unit 104 extracts a median value of the normalized diagnosis values (step S205).

Specifically, the diagnosis unit 104 reads from the storage unit 103, the number of normalized diagnosis values equal to the target value for the status value Pd. Then, the diagnosis unit 104 extracts the median value of the read number of normalized diagnosis values equal to the target number for the status value Pd. The diagnosis unit 104 performs the same operation for the other status values.

Next, the diagnosis unit 104 extracts a median value of the normalized reference values (step S206).

Specifically, the diagnosis unit 104 reads from the storage unit 103, the plurality of normalized reference values for the status value Pd. Then, the diagnosis unit 104 extracts the median value of the read plurality of normalized reference values for the status value Pd. The diagnosis unit 104 performs the same operation for the other status values.

Next, the diagnosis unit 104 compares the median value of the normalized diagnosis values extracted in step S205 with the median value of the normalized reference values extracted in step S206 (step S207).

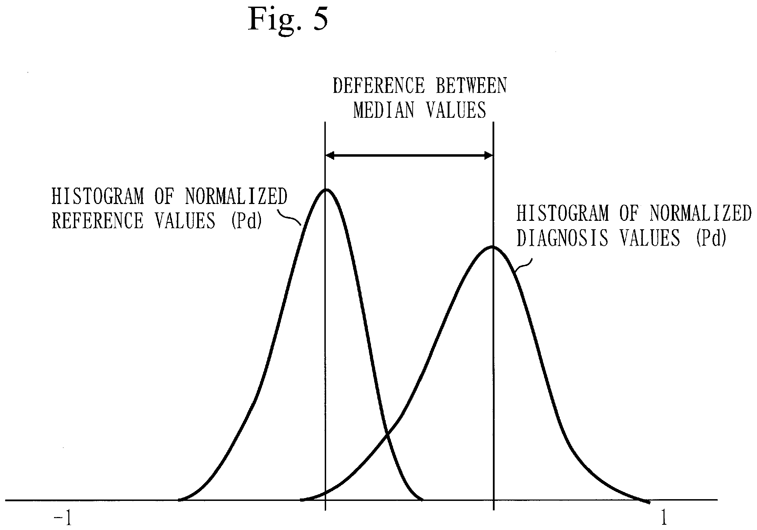

For example, as illustrated in Fig. 5, the diagnosis unit 104 may generate a histogram of the normalized diagnosis values for the status value Pd and a histogram of the normalized reference values for the status value Pd, and compare median values of the histograms with each other.

Alternatively, the diagnosis unit 104 may compare the normalized diagnosis values with the normalized reference values, using a method other than the comparison of the median values.

Next, the diagnosis unit 104 selects the diagnosis result notification message depending on a difference in the median value obtained from the comparison in step S207 (step S208).

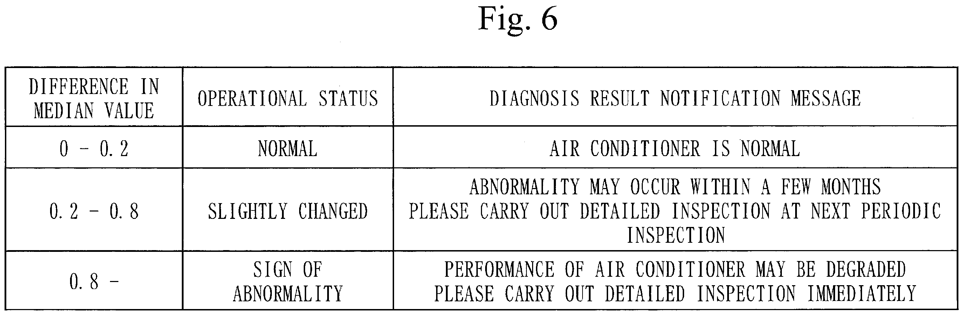

In the present embodiment, as illustrated in Fig. 6, it is assumed that the diagnosis result notification messages are prepared depending on a level of the difference in the median value.

The diagnosis unit 104 selects the diagnosis result notification message corresponding to the level of the difference in the median value obtained from the comparison in step S207.

Finally, the diagnosis unit 104 displays on, for example, a display device, the diagnosis result notification message selected in step S208, via the display unit 105 (step S209).

Next, a procedure of the normalization by the normalization unit 102 performed in step S102 and step S202 will be described.

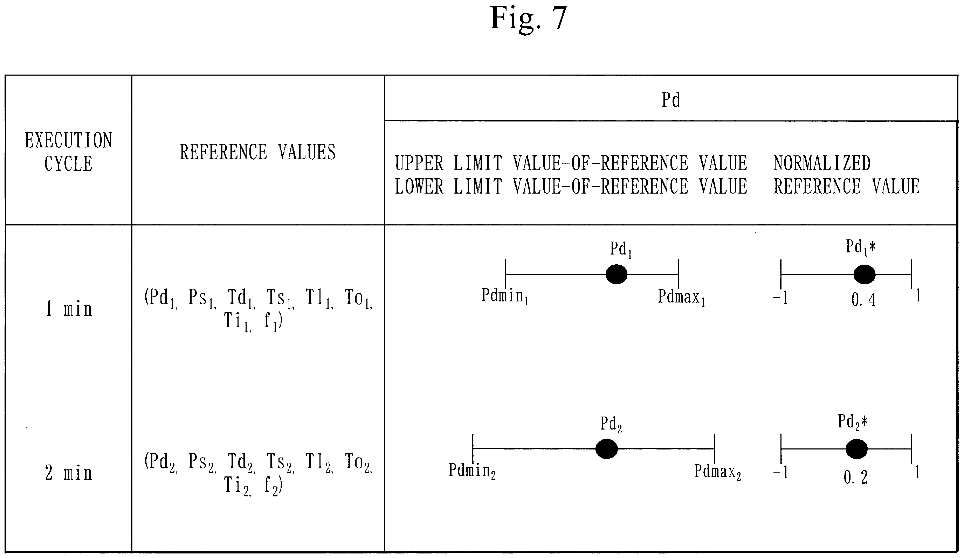

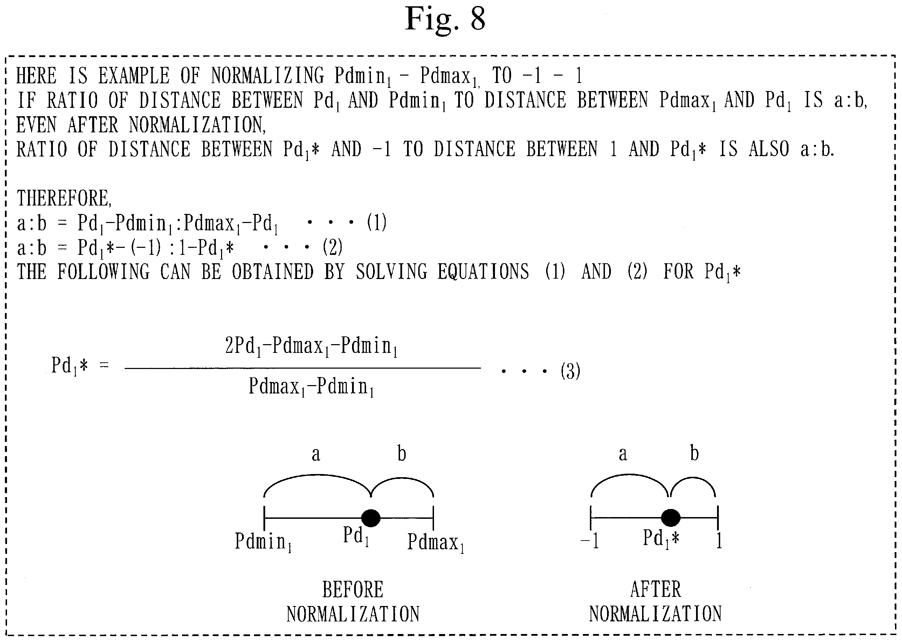

In the following, the procedure of the normalization in step S102 will be described with reference to Figs. 7 and 8.

In Fig. 7, it is assumed that the execution cycle is one minute. 1 min in the column of "execution cycle" means the first cycle of the execution cycle. Further, 2 min means the second cycle of the execution cycle. Although only up to 2 min is indicated in Fig. 7, it is assumed that there are also items of the execution cycles after 3 min.

Further, the reference values obtained during each execution cycle is indicated in the column of "reference values". A subscript of the reference value corresponds to the number of times of execution cycles.

Further, an "upper limit value-of-reference value", a "lower limit value-of-reference value", and a "normalized reference value" for each execution cycle are indicated in the column of "Pd". Although only the column of "Pd" is indicated in Fig. 7 for the depiction convenience, there are the "upper limit value-of-reference value", the "lower limit value-of-reference value", and the "normalized reference value" similarly also for the other reference values such as Ps.

The "upper limit value-of-reference value" is an upper limit value possible for the reference value Pd during each execution cycle. The upper limit value-of-reference value of the reference value Pd is written as Pdmax. The subscript of Pdmax corresponds to the number of times of execution cycles.

The "lower limit value-of-reference value" is a lower limit value possible for the reference value Pd during each execution cycle. The lower limit value-of-reference value of the reference value Pd is written as Pdmin. The subscript of Pdmin corresponds to the number of times of execution cycles.

In this way, the upper limit value and the lower limit value possible for the reference value Pd vary depending on time points.

The normalization unit 102 acquires the upper limit value-of-reference value Pdmax and the lower limit value-of-reference value Pdmin at a time point when the reference value Pd is acquired from the air conditioner 200.

Details of the upper limit value-of-reference value Pdmax and the lower limit value-of-reference value Pdmin will be described below.

In the present embodiment, the normalization rule is a rule that defines to decide, based on a ratio of a difference between a status value (Pdₙ) of n (n ≥ 1) th cycle of the execution cycle and an upper limit value-of-status value (Pdmaxₙ) to a difference between the status value (Pdₙ) and a lower limit value-of-status value (Pdminₙ), a position of the status value (Pdₙ) within a normalization range (a range from "1" to "-1" in the example of Fig. 7) which is a numerical value range from a predetermined upper limit value to a predetermined lower limit value, and to normalize the status value (Pdₙ).

For example, the normalization unit 102 acquires as an upper limit value-of-reference value Pdmax₁ and a lower limit value-of-reference value Pdmin₁, an upper limit value and a lower limit value possible for the reference value Pd₁ at a time point when the reference value Pd₁ of the first cycle of the execution cycle is acquired. Then, the normalization unit 102 decides a position of the reference value Pd₁ within the numerical value range (the normalization range) between "1" and "-1" and normalizes the reference value Pd₁, based on a ratio of a difference between the reference value Pd₁ and the upper limit value-of-reference value Pdmax₁ to a difference between the reference value Pd₁ and the lower limit value-of-reference value Pdmin₁. The normalized reference value of the reference value Pd₁ is written as "Pdi*". Similarly, the normalized reference value of a reference value Pd₂ is written as "Pd₂*".

If the reference value Pd₁ is within a range between the upper limit value-of-reference value Pdmax₁ and the lower limit value-of-reference value Pdmin₁, the normalized reference value Pd₁* is a numerical value within the numerical value range (the normalization range) between "1" and "-1" (the normalized reference value Pd₁* is "0.4" in the example of Fig. 7).

Specifically, the normalization unit 102 normalizes the reference value Pd₁, using equations (1), (2), and (3) indicated in Fig. 8.

Fig. 7 describes the procedure of the normalization by the normalization unit 102, and the normalization unit 102 does not need to use the table illustrated in Fig. 7 for the normalization.

The normalization of step S202 is also performed according to the procedure indicated in Figs. 7 and 8.

That is, based on the normalization rule described above, the normalization unit 102 acquires as an upper limit value-of-diagnosis value Pdmaxᵢ and a lower limit value-of-diagnosis value Pdminᵢ, an upper limit value and a lower limit value possible for the diagnosis value Pdᵢ at a time point when the diagnosis value Pdᵢ of i (i ≥ 1) th cycle of the execution cycle is acquired during the diagnosis period. Then, the normalization unit 102 decides a position of the diagnosis value Pdᵢ within the numerical value range (the normalization range) between "1" and "-1" and normalizes the diagnosis value Pdᵢ, based on a ratio of a difference between the diagnosis value Pdᵢ and the upper limit value-of-diagnosis value Pdmaxᵢ to a difference between the diagnosis value Pdᵢ and the lower limit value-of-diagnosis value Pdminᵢ.

If the diagnosis value Pdᵢ is within a range between the upper limit value-of-diagnosis value Pdmaxᵢ and the lower limit value-of-diagnosis value Pdminᵢ, the normalized diagnosis value Pdᵢ is a numerical value within the numerical value range (the normalization range) between "1" and "-1".

Next, Pdmax, Pdmin, an upper limit value-of-status value Psmax of the suction pressure Ps, and a lower limit value-of-status value Psmin of the suction pressure Ps will be described.

Pdmax is an upper limit value of the discharge pressure Pd within a range in which the air conditioner 200 does not abnormally stop. In order to prevent damage due to an excessive increase in the discharge pressure Pd, the air conditioner 200 normally forcibly stops operation when the discharge pressure Pd exceeds a predetermined value. Pdmax is the predetermined value functioning in this way.

Pdmax is normally described in specifications, a service manual, or the like of the air conditioner 200, as an explanation of the abnormal stop. Therefore, for example, the user of the diagnosis apparatus 100 sets Pdmax in advance in the normalization unit 102.

Pdmin is a lower limit value of the discharge pressure Pd within the range in which the air conditioner 200 does not abnormally stop. Specifically, the normalization unit 102 acquires as Pdmin, a saturation pressure conversion value of the intake air temperature-of-condenser To. This is because a condensation temperature is higher than the intake air temperature-of-condenser To (= an outdoor air temperature).

Further, Psmax is an upper limit value of the suction pressure Ps within a range in which the air conditioner 200 does not abnormally stop. Specifically, the normalization unit 102 acquires as Psmax, a saturation pressure conversion value of the intake air temperature-of-evaporator Ti. This is because an evaporation temperature is lower than the intake air temperature-of-evaporator Ti.

Further, Psmin is a lower limit value of the suction pressure Ps within the range in which the air conditioner 200 does not abnormally stop. In order to prevent damage due to an excessive decrease in the suction pressure Ps, the air conditioner 200 normally forcibly stops the operation when the suction pressure Ps falls below a predetermined value. Psmin is the predetermined value mentioned above.

Psmin is normally described in the specifications, the service manual, or the like of the air conditioner 200, as an explanation of the abnormal stop. Therefore, for example, the user of the diagnosis apparatus 100 sets Psmin in advance in the normalization unit 102.

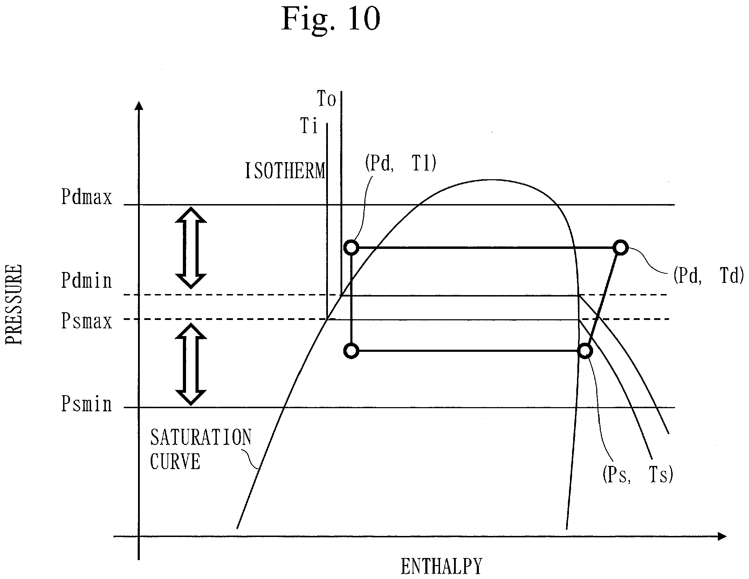

In Fig. 10, Pdmax, Pdmin, Psmax, and Psmin are added on the p-h diagram illustrated in Fig. 9.

Next, an upper limit value-of-status value Tdmax and a lower limit value-of-status value Tdmin of the discharge temperature-of-refrigerant Td, an upper limit value-of-status value Tsmax and a lower limit value-of-status value Tsmin of the suction temperature-of-refrigerant Ts, and an upper limit value-of-status value Tlmax and a lower limit value-of-status value Tlmin of the intake air temperature-of-condenser T₁, will be described.

Tdmax is an upper limit value of the discharge temperature Td within a range in which the air conditioner 200 does not abnormally stop. In order to prevent damage due to an excessive increase in the discharge temperature Td, the air conditioner 200 normally forcibly stops the operation when the discharge temperature Td exceeds a predetermined value. Tdmax is the predetermined value functioning in this way.

Tdmax is normally described in the specifications, the service manual, or the like of the air conditioner 200, as an explanation of the abnormal stop. Therefore, for example, the user of the diagnosis apparatus 100 sets Tdmax in advance in the normalization unit 102.

Further, Tdmin is a lower limit value of the discharge temperature Td within the range in which the air conditioner 200 does not abnormally stop. Specifically, the normalization unit 102 acquires the condensation temperature as Tdmin. This is because the air conditioner 200 normally has a discharge overheat degree > 0. Here, the condensation temperature is a value obtained from conversion of the discharge pressure Pd into a saturation temperature.

Tsmax is an upper limit value of the suction temperature-of-refrigerant Ts within a range in which the air conditioner 200 does not abnormally stop. Specifically, the normalization unit 102 acquires the intake air temperature-of-condenser To (= the outdoor air temperature) as Tsmax. This is because the suction temperature Ts is lower than the intake air temperature-of-condenser To.

Tsmin is a lower limit value of the suction temperature-of-refrigerant Ts within the range in which the air conditioner 200 does not abnormally stop. Specifically, the normalization unit 102 acquires the evaporation temperature as Tsmin. This is because the air conditioner 200 normally has a suction overheat degree > 0. Here, the evaporation temperature is a value obtained from conversion of the suction pressure Ps into a saturation temperature.

Tlmax is an upper limit value of the outlet liquid temperature-of-condenser Tl within a range in which the air conditioner 200 does not abnormally stop. Specifically, the normalization unit 102 acquires the condensation temperature as Tlmax. This is because the air conditioner 200 normally has a supercooling degree > 0. Here, the condensation temperature is a value obtained from convention of the discharge pressure Pd into a saturation temperature.

Tlmin is a lower limit value of the outlet liquid temperature-of-condenser Tl within the range in which the air conditioner 200 does not abnormally stop. Specifically, the normalization unit 102 acquires the intake air temperature-of-condenser To as Tlmin. This is because the outlet liquid temperature-of-condenser Tl is higher than the intake air temperature-of-condenser To.

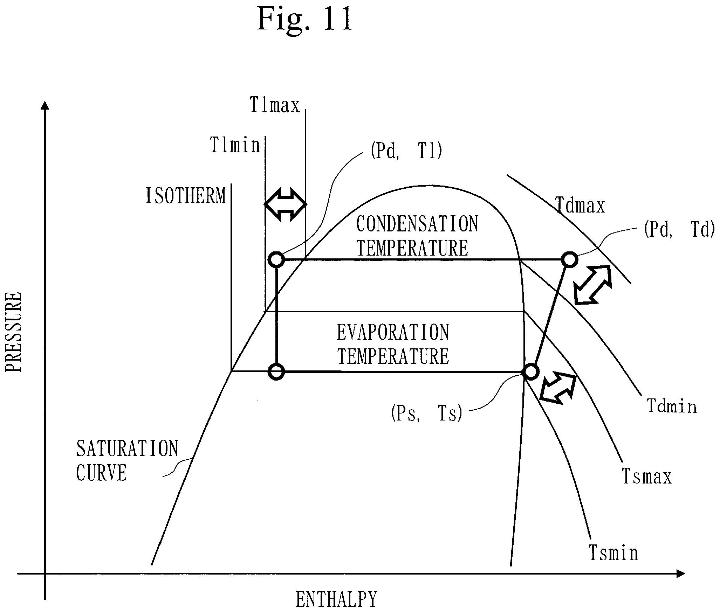

In Fig. 11, Tdmax, Tdmin, Tsmax, Tsmin, Tlmax, and Tlmin are added on the p-h diagram illustrated in Fig. 9.

### *** Description of Effect of Embodiment ***

Thus, in the present embodiment, the diagnosis apparatus 100 compares the normalized diagnosis values with the normalized reference values. That is, by normalizing the reference values and the diagnosis values, the diagnosis apparatus 100 is able to diagnose the operational status of the air conditioner 200 even if an environmental condition changes between a time of initial installation and a time of diagnosis of the air conditioner 200. Therefore, according to the present embodiment, it is possible to diagnose whether the air conditioner 200 is approaching abnormality or there is no change in the operational status of the air conditioner 200. That is, according to the present embodiment, it is possible to detect the change in the operational status of the air conditioner 200 in a transitional stage before the air conditioner 200 results in an abnormality.

When the air conditioner 200 is approaching the abnormality, a service person of the air conditioner 200 can take a measure for preventing the abnormality, such as a field survey. As a result, it is possible to continue the operation of the air conditioner 200.

In the present embodiment, the description has proceeded using the air conditioner 200 as an example of the device. However, the device is not limited to the air conditioner 200. This embodiment can be applied also to any device as long as the device may change its operational status as time elapses.

Further, in the present embodiment, the configuration has been described in which the normalization unit 102 normalizes the reference values to obtain the normalized reference values. Alternatively, an external device normalizes the reference values, and the normalization unit 102 may acquire the normalized reference values from the external device.

### Embodiment 2.

In the present embodiment, an example will be described in which diagnosis accuracy is improved by performing diagnosis in consideration of an operational environment of the air conditioner 200 at a time when a diagnosis value is measured.

In the present embodiment, differences from Embodiment 1 will be mainly described.

Matters not described below are the same as those in Embodiment 1.

### *** Description of Configuration ***

The configuration of the diagnosis system 1000 according to the present embodiment is as illustrated in Fig. 1.

Further, the hardware configuration example of the diagnosis apparatus 100 according to the present embodiment is as illustrated in Fig. 2.

### *** Description of Operation ***

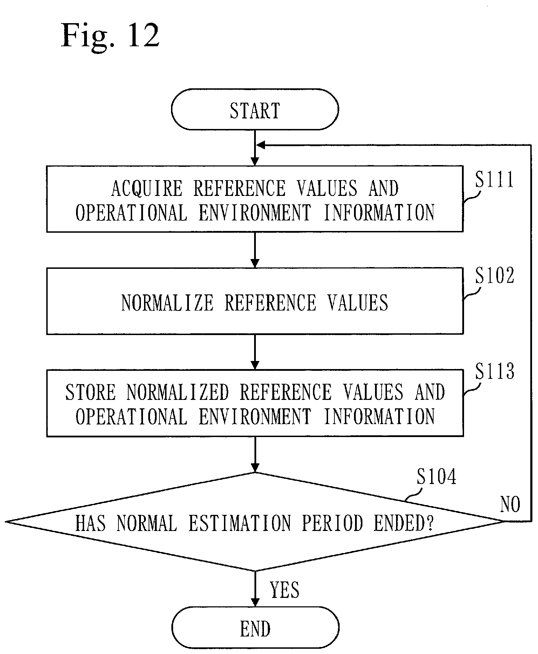

Fig. 12 illustrates an operational example of the diagnosis apparatus 100 during the normal estimation period according to the present embodiment.

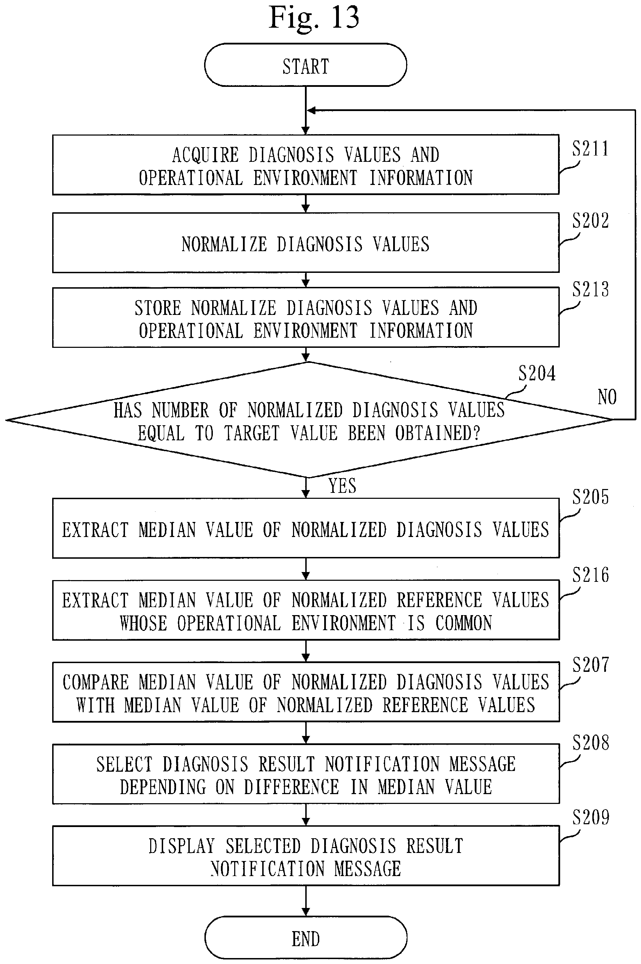

Fig. 13 illustrates an operational example of the diagnosis apparatus 100 during the diagnosis period according to the present embodiment.

First, the operational example of the diagnosis apparatus 100 during the normal estimation period will be described with reference to Fig. 12.

First, the acquiring unit 101 acquires (receives) from the air conditioner 200, reference values and operational environment information, during the normal estimation period (step S111).

The operational environment information is information indicating an operational environment of the air conditioner 200 at a time point when a reference value is measured. The operational environment is, for example, an outdoor air temperature, an indoor air temperature, or the like. Further, the acquiring unit 101 may acquire any status value as the operational environment information. The acquiring unit 101 may acquire as the operational environment information, for example, the frequency-of-compressor f.

The acquiring unit 101 outputs to the normalization unit 102, the acquired reference values and the acquired operational environment information.

Next, the normalization unit 102 normalizes each of the reference values acquired in step S101 according to the normalization rule (step S102). Step S102 is the same as that illustrated in Fig. 3.

Next, the normalization unit 102 associates the normalized reference values and the operational environment information with each other, and stores them into the storage unit 103 (step S113).

Next, the acquiring unit 101 determines whether or not the normal estimation period has ended (step S104). Step S104 is the same as that illustrated in Fig. 3.

Next, the operational example of the diagnosis apparatus 100 during the diagnosis period will be described with reference to Fig. 13.

First, the acquiring unit 101 receives (acquires) from the air conditioner 200, diagnosis values and the operational environment information (step S211).

Further, as with the operational environment information acquired in step S111, the operational environment information acquired in step S211 is also information indicating an operational environment of the air conditioner 200 at a time point when a diagnosis value is measured.

Next, the normalization unit 102 normalizes each of the diagnosis values acquired in step S201 according to the normalization rule (step S202). Step S202 is the same as that illustrated in Fig. 4.

Next, the normalization unit 102 associates the normalized diagnosis values and the operational environment information with each other, and stores them into the storage unit 103 (step S213).

Next, the normalization unit 102 determines whether or not the number of normalized diagnosis values equal to a target number has been obtained (step S204). Step S204 is the same as that illustrated in Fig. 4.

When the number of normalized diagnosis values equal to the target number has been obtained (YES in step S204), the diagnosis unit 104 extracts a median value of the normalized diagnosis values (step S205). Step S205 is the same as that illustrated in Fig. 4.

Next, the diagnosis unit 104 extracts a median value of the normalized reference values whose operational environment is common to that of the normalized diagnosis values (step S216). "Operational environment is common" means that the operational environment is the same as or similar to another.

Specifically, the diagnosis unit 104 identifies the operational environment indicated in the operational environment information that is associated with the normalized diagnosis values from which the median value has been extracted in step S205. Then, the diagnosis unit 104 reads from the storage unit 103, a plurality of normalized reference values associated with the operational environment information indicating the operational environment that is the same as or similar to the identified operational environment. Then, the diagnosis unit 104 extracts a median value among the read plurality of normalized reference values.

Next, the diagnosis unit 104 compares the median value of the normalized diagnosis values extracted in step S205 with the median value of the normalized reference values extracted in step S216 (step S207). Step S207 is the same as that illustrated in Fig. 4.

Next, the diagnosis unit 104 selects the diagnosis result notification message corresponding to a difference in the median value obtained from the comparison of the median value of the normalized diagnosis values with the median value of the normalized reference values in step S207 (step S208). Step S208 is the same as that illustrated in Fig. 4.

Finally, the diagnosis unit 104 displays on, for example, a display device, via the display unit 105, the diagnosis result notification message selected in step S208 (step S209). Step S209 is the same as that illustrated in Fig. 4.

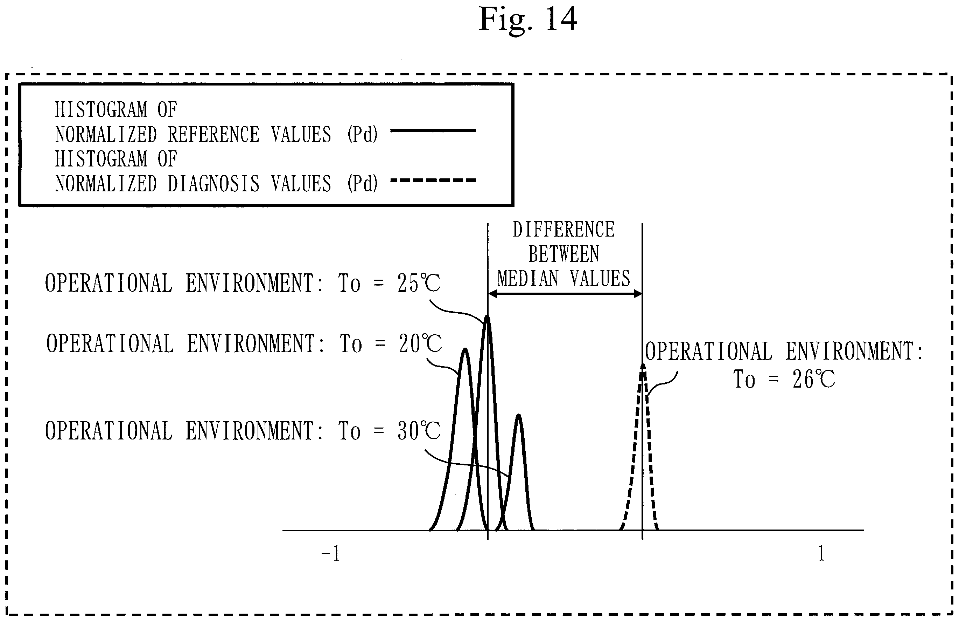

Fig. 14 illustrates an example of steps S216 and S207 in Fig. 13.

In the example of Fig. 14, the operational environment of the normalized diagnosis value of the status value Pd is "To = 26°C". That is, the operational environment indicated in the operational environment information associated with the normalized diagnosis value of the status value Pd is "To = 26°C". To is the intake air temperature-of-condenser (= the outdoor air temperature).

In the example of Fig. 14, there are "To = 20°C, "To = 25°C" and "To = 30°C" as operational environments of the normalized reference value of the status value Pd. That is, there are the normalized reference value associated with the operational environment information indicating "To = 20°C" as the operational environment, the normalized reference value associated with the operational environment information indicating "To = 25°C" as the operational environment, and the normalized reference value associated with the operational environment information indicating "To = 30°C" as the operational environment.

The operational environment similar to "To = 26°C" which is the operational environment of the normalized diagnosis value, is "To = 25°C". Therefore, the diagnosis unit 104 reads from the storage unit 103, the plurality of normalized reference values associated with the operational environment information indicating "To = 25°C".

Then, the diagnosis unit 104 extracts a median value among the read plurality of normalized reference values (step S216).

After that, the diagnosis unit 104 compares a median value of the normalized diagnosis values whose operational environments are "To = 26°C" with the median value of the normalized reference values whose operational environments are "To = 25°C" (step S207).

Fig. 14 illustrates the example in which the diagnosis unit 104 compares the median value of a histogram of the normalized diagnosis values whose operational environments are "To = 26°C" with the median value of a histogram of the normalized reference values whose operational environments are "To = 25°C".

### *** Description of Effect of Embodiment ***

Thus, in the present embodiment, when there is a plurality of normalized reference values whose operational environments differ from each other, the diagnosis apparatus 100 selects the normalized reference value whose operational environment is the same as or similar to the operational environment of the normalized diagnosis value. Therefore, according to the present embodiment, the diagnosis apparatus 100 is possible to perform diagnosis, using the normalized reference value whose operational environment is close to that of the normalized diagnosis value. As a result, it is possible to improve diagnosis accuracy.

### Embodiment 3.

Even for the same models, installation conditions normally differ for each air conditioner 200. The installation conditions are such as the length of a refrigerant pipe, an amount of additional refrigerant filled, and an air flow status around a suction port. If the installation conditions differ, operational statuses differ for each air conditioner 200 even if outdoor air temperatures, indoor air temperatures, loads, and the like are the same.

Therefore, even during the normal estimation period, there is a case where the reference value is close to the upper limit value-of-reference value or the lower limit value-of-reference value depending on the installation conditions. Further, similarly, even if the air conditioner 200 is normal, there is a case where the diagnosis value is close to the upper limit value-of-diagnosis value or the lower limit value-of-diagnosis value depending on the installation conditions.

In the present embodiment, the normalization unit 102 corrects the reference value or the upper limit value-of-reference value and the lower limit value-of-reference value according to a correction rule. Further, in the present embodiment, the normalization unit 102 corrects the diagnosis value or the upper limit value-of-diagnosis value and the lower limit value-of-diagnosis value according to the correction rule. For example, the normalization unit 102 performs correction based on a standard status value, an upper limit value-of-standard status value and a lower limit value-of-standard status value.

The standard status value, the upper limit value-of-standard status value and the lower limit value-of-standard status value are hereinafter referred to as a standard status value, a standard upper limit value and a standard lower limit value, respectively. Further, the standard status value, the standard upper limit value and the standard lower limit value are correctively referred to as a standard value.

The standard value is, for example, a value such as a value measured at a time of factory shipment, a value indicated in catalog specifications or a service handbook, or the like.

In the present embodiment, differences from Embodiment 1 will be mainly described.

Matters not described below are the same as those in Embodiment 1.

### *** Description of Configuration ***

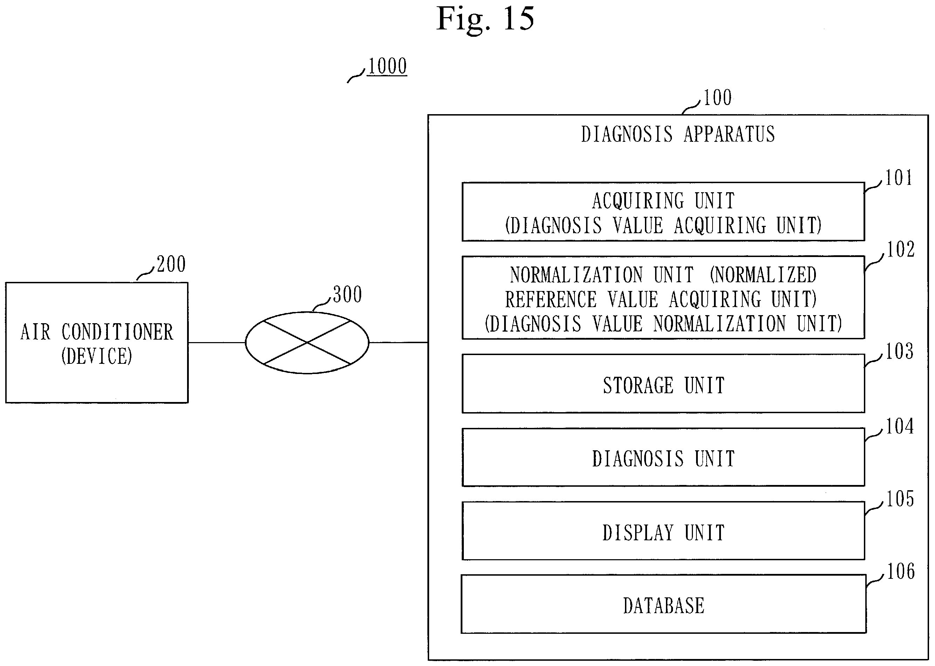

Fig. 15 illustrates a configuration example of the diagnosis system 1000 according to the present embodiment.

In Fig. 15, a database 106 is added, compared with Fig. 1.

The database 106 stores standard status values, standard upper limit values and standard lower limit values. The database 106 is implemented by the main storage device 902 or the auxiliary storage device 903.

In the present embodiment, the normalization unit 102 corrects the reference value or the upper limit value-of-reference value and the lower limit value-of-reference value according to the correction rule, using the standard value. Then, the normalization unit 102 performs normalization, using the corrected reference value or the corrected upper limit value-of-reference value and the corrected lower limit value-of-reference value, and obtains the normalized reference value.

Further, the normalization unit 102 corrects the diagnosis value or the upper limit value-of-diagnosis value and the lower limit value-of-diagnosis value according to the correction rule, using the standard value. Then, the normalization unit 102 performs normalization, using the corrected diagnosis value or the corrected upper limit value-of-diagnosis value and the corrected lower limit value-of-diagnosis value, and obtains the normalized diagnosis value.

Further, in the present embodiment, the storage unit 103 also stores the correction rule in addition to the normalization rule.

Since the acquiring unit 101, the diagnosis unit 104, and the display unit 105 illustrated in Fig. 15 are the same as those illustrated in Fig. 1, the description thereof is omitted.

A hardware configuration example of the diagnosis apparatus 100 according to the present embodiment is as illustrated in Fig. 2.

### *** Description of Operation ***

Operation of the diagnosis apparatus 100 according to the present embodiment during a normal estimation period is as illustrated in Fig. 3.

In step S102, the normalization unit 102 normalizes each reference value according to the normalization rule. However, in the present embodiment, it is described in the normalization rule that the status value or the upper limit value-of-status value and the lower limit value-of-status value is/are corrected according to the correction rule.

Therefore, in the present embodiment, the normalization unit 102 corrects in step S102, the reference value or the upper limit value-of-reference value and the lower limit value-of-reference value, using the standard value. Then, the normalization unit 102 performs normalization, using the corrected reference value or the corrected upper limit value-of-reference value and the corrected lower limit value-of-reference value, and obtains the normalized reference value.

Since the processes other than step S102 are the same as those described in Embodiment 1, the description thereof is omitted.

The operation of the diagnosis apparatus 100 according to the present embodiment during the diagnosis period is as illustrated in Fig. 4.

In step S202, the normalization unit 102 normalizes each diagnosis value according to the normalization rule. However, in the present embodiment, as described above, it is described in the normalization rule that the status value is corrected according to the correction rule.

Therefore, in the present embodiment, the normalization unit 102 corrects in step S202, the diagnosis value, using the standard value. Then, the normalization unit 102 performs normalization, using the corrected diagnosis value, and obtains the normalized diagnosis value.

Since the processes other than step S202 are the same as those illustrated in Embodiment 1, the description thereof is omitted.

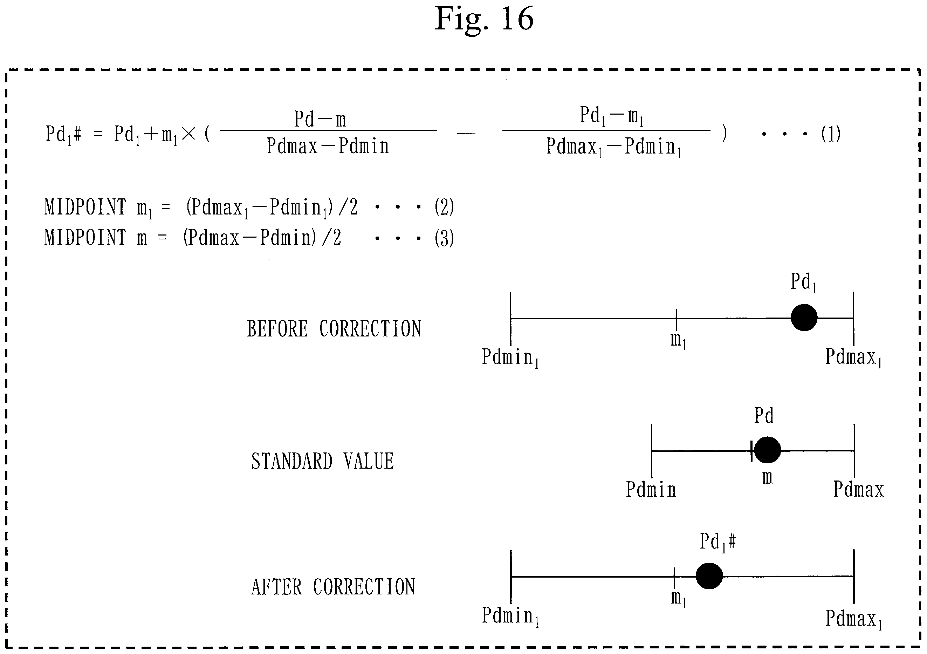

Fig. 16 illustrates a procedure for the correction in steps S102 and S202.

Fig. 16 illustrates an example of the correction for the status value Pd₁.

In the following, the example in which the normalization unit 102 corrects the reference value Pdi in step S102 will be described, but the normalization unit 102 is able to correct the diagnosis value Pdᵢ in step S202 by the same procedure as described below.

As illustrated in "before correction" in Fig. 16, the reference value Pd₁ before correction is a value close to the upper limit value-of-reference value Pdmax₁.

On the other hand, as illustrated in "standard value" in Fig. 16, the standard status value Pd is positioned approximately midway between the standard lower limit value Pdmin and the standard upper limit value Pdmax.

The normalization unit 102 calculates the corrected reference value Pd₁# according to an equation (1). A midpoint m₁ included in the equation (1) is calculated, using an equation (2), and the midpoint m is calculated, using an equation (3).

By the normalization unit 102 correcting the reference value Pd₁, the corrected reference value Pd₁# is located approximately midway between the lower limit value-of-reference value Pdmin₁ and the upper limit value-of-reference value Pdmax₁, as illustrated in "after correction" in Fig. 16.

### *** Description of Effect of Embodiment ***

Thus, in the present embodiment, the diagnosis apparatus 100 corrects the reference value and also corrects the diagnosis value, depending on the installation conditions. Therefore, according to the present embodiment, it is possible to absorb differences in the installation conditions and it is possible to improve diagnosis accuracy.

Embodiments 1 and 3 have been described above and two or more of these embodiments may be implemented in combination.

Alternatively, one of these embodiments may be partially implemented.

Alternatively, two or more of these embodiments may be partially implemented in combination.

Further, the configurations and procedures described in these embodiments may be modified as necessary.

### *** Supplementary Description of Hardware Configuration ***

Finally, a supplementary description of the hardware configuration of the diagnosis apparatus 100 will be given.

The processor 901 illustrated in Fig. 2 is an Integrated Circuit (IC) that performs processing.

The processor 901 is a Central Processing Unit (CPU), a Digital Signal Processor (DSP), or the like.

The main storage device 902 illustrated in Fig. 2 is a Random Access Memory (RAM).

The auxiliary storage device 903 illustrated in Fig. 2 is a Read Only Memory (ROM), a flash memory, a Hard Disk Drive (HDD), or the like.

The communication device 904 illustrated in Fig. 2 is an electronic circuit that executes a communication process for data.

The communication device 904 is, for example, a communication chip or a Network Interface Card (NIC).

As described above, the input/output device 905 is, for example, a mouse, a keyboard, or a display device.

Further, the auxiliary storage device 903 also stores an Operating System (OS).

Then, at least a part of the OS is executed by the processor 901.

While executing at least the part of the OS, the processor 901 executes programs that implement functions of the acquiring unit 101, the normalization unit 102, the diagnosis unit 104, and the display unit 105.

By the processor 901 executing the OS, task management, memory management, file management, communication control, and the like are performed.

Further, at least one of information, data, a signal value, and a variable value that indicate results of processes of the acquiring unit 101, the normalization unit 102, the diagnosis unit 104, and the display unit 105 is stored in at least one of the main storage device 902, the auxiliary storage device 903, and a register and a cache memory in the processor 901.

Further, the programs that implement the functions of the acquiring unit 101, the normalization unit 102, the diagnosis unit 104, and the display unit 105 may be stored in a portable recording medium such as a magnetic disk, a flexible disk, an optical disc, a compact disc, a Blu-ray (registered trademark) disc, or a DVD. Then, the portable recording medium storing the programs that implement the functions of the acquiring unit 101, the normalization unit 102, the diagnosis unit 104, and the display unit 105 may be distributed.

Further, the "unit" of each of the acquiring unit 101, the normalization unit 102, the diagnosis unit 104, and the display unit 105 may be read as a "circuit", "step", "procedure", "process", or "circuitry".

Further, the diagnosis apparatus 100 may be implemented by a processing circuit. The processing circuit is, for example, a logic Integrated Circuit (IC), a Gate Array (GA), an Application Specific Integrated Circuit (ASIC), or a Field-Programmable Gate Array (FPGA).

In this case, each of the acquiring unit 101, the normalization unit 102, the diagnosis unit 104, and the display unit 105 is implemented as a part of the processing circuit.

In the present description, a superordinate concept of the processor and the processing circuit is referred to as "processing circuitry".

That is, each of the processor and the processing circuit is a specific example of the "processing circuitry".

### Reference Signs List

100: diagnosis apparatus; 101: acquiring unit; 102: normalization unit; 103: storage unit; 104: diagnosis unit; 105: display unit; 106: database; 200: air conditioner; 300: network; 901: processor; 902: main storage device; 903: auxiliary storage device; 904: communication device; 905: input/output device; 1000: diagnosis system

## Claims

1. A diagnosis apparatus comprising:
a normalized reference value acquiring unit to acquire a normalized reference value being a value obtained from normalization of a reference value according to a predetermined normalization rule, the reference value being a status value acquired from a device during a normal estimation period during which the device is estimated to operate normally, the status value indicating an operational status of the device;
a diagnosis value acquiring unit to acquire from the device, the status value as a diagnosis value during a diagnosis period during which it is not clear whether or not the device operates normally and which is after the normal estimation period;
a diagnosis value normalization unit to normalize the diagnosis value according to the normalization rule; and
a diagnosis unit to diagnose the operational status of the device during the diagnosis period, using the normalized reference value and a normalized diagnosis value obtained from the normalization of the diagnosis value by the diagnosis value normalization unit.

2. The diagnosis apparatus according to claim 1, wherein
the normalized reference value acquiring unit acquires a plurality of normalized reference values obtained according to the normalization rule from the normalization of a plurality of reference values acquired from the device at a plurality of times within the normal estimation period,
the diagnosis value acquiring unit acquires a plurality of diagnosis values from the device at a plurality of times within the diagnosis period,
the diagnosis value normalization unit normalizes the plurality of diagnosis values according to the normalization rule, and
the diagnosis unit diagnoses the operational status of the device during the diagnosis period, using the plurality of normalized reference values and a plurality of normalized diagnosis values obtained from the normalization by the diagnosis value normalization unit.

3. ] The diagnosis apparatus according to claim 2, wherein
the diagnosis unit compares a median value of the plurality of normalized diagnosis values with a median value of the plurality of normalized reference values, and diagnoses the operational status of the device during the diagnosis period.

4. The diagnosis apparatus according to claim 3, wherein
the diagnosis unit selects a diagnosis result notification message from among a plurality of diagnosis result notification messages each of which indicates a diagnosis result, depending on a difference between the median value of the plurality of normalized diagnosis values and the median value of the plurality of normalized reference values, and outputs the selected diagnosis result notification message.

5. The diagnosis apparatus according to claim 2, wherein
the normalized reference value acquiring unit acquires operational environment information indicating an operational environment of the device at a time point when a reference value corresponding to each of the plurality of normalized reference values is acquired from the device,
the diagnosis value acquiring unit acquires operational environment information indicating an operational environment of the device at a time point when each of the plurality of diagnosis values is acquired from the device, and
the diagnosis unit diagnoses the operational status of the device during the diagnosis period, using a normalized diagnosis value and a normalized reference value each of whose operational environment information indicates a common operational environment.

6. The diagnosis apparatus according to claim 1, wherein
the normalization rule is a rule that defines to acquire an upper limit value-of-status value and a lower limit value-of-status value which are an upper limit value and a lower limit value possible for the status value at a time point when the status value is acquired from the device, to decide a position of the status value within a normalization range which is a numerical value range from a predetermined upper limit value to a predetermined lower limit value, based on a ratio of a difference between the status value and the upper limit value-of-status value to a difference between the status value and the lower limit value-of-status value, and to normalize the status value,
the normalized reference value acquiring unit acquires a normalized reference value obtained according to the normalization rule by acquiring an upper limit value-of-reference value and a lower limit value-of-reference value which are an upper limit value and a lower limit value possible for the reference value at a time point when the reference value is acquired from the device, and by deciding a position of the reference value within the normalization range, based on a ratio of a difference between the reference value and the upper limit value-of-reference value to a difference between the reference value and the lower limit value-of-reference value, and
the diagnosis value normalization unit, according to the normalization rule, acquires an upper limit value-of-diagnosis value and a lower limit value-of-diagnosis value which are an upper limit value and a lower limit value possible for the diagnosis value at a time point when the diagnosis value is acquired from the device, decides a position of the diagnosis value within the normalization range, based on a ratio of a difference between the diagnosis value and the upper limit value-of-diagnosis value to a difference between the diagnosis value and the lower limit value-of-diagnosis value, and normalizes the diagnosis value.

7. The diagnosis apparatus according to claim 1, wherein
the normalization rule is a rule that defines to acquire an upper limit value-of-status value and a lower limit value-of-status value which are an upper limit value and a lower limit value possible for the status value at a time point when the status value is acquired from the device, to correct the status value according to a predetermined correction rule, to decide a position of the status value within a normalization range which is a numerical value range from a predetermine upper limit value to a predetermined lower limit value, based on a ratio of a difference between the corrected status value and the upper limit value-of-status value to a difference between the corrected status value and the lower limit value-of-status value, and to normalize the status value,
the normalized reference value acquiring unit acquires a normalized reference value obtained according to the normalization rule by acquiring an upper limit value-of-reference value and a lower limit value-of-reference value which are an upper limit value and a lower limit value possible for the reference value at a time point when the reference value is acquired from the device, by correcting the reference value according to the correction rule, and by deciding a position of the corrected reference value within the normalization range, based on a ratio of a difference between the corrected reference value and the upper limit value-of-reference value to a difference between the corrected reference value and the lower limit value-of-reference value, and
the diagnosis value normalization unit, according to the normalization rule, acquires an upper limit value-of-diagnosis value and a lower limit value-of-diagnosis value which are an upper limit value and a lower limit value possible for the diagnosis value at a time point when the diagnosis value is acquired from the device, corrects the diagnosis value according to the correction rule, decides a position of the corrected diagnosis value within the normalization range, based on a ratio of a difference between the corrected diagnosis value and the upper limit value-of-diagnosis value to a difference between the corrected diagnosis value and the lower limit value-of-diagnosis value, and normalizes the diagnosis value.

8. A diagnosis method comprising:
by a computer, acquiring a normalized reference value being a value obtained from normalization of a reference value according to a predetermined normalization rule, the reference value being a status value acquired from a device during a normal estimation period during which the device is estimated to operate normally, the status value indicating an operational status of the device;
by the computer, acquiring from the device, the status value as a diagnosis value during a diagnosis period during which it is not clear whether or not the device operates normally and which is after the normal estimation period;
by the computer, normalizing the diagnosis value according to the normalization rule; and
by the computer, diagnosing the operational status of the device during the diagnosis period, using the normalized reference value and a normalized diagnosis value obtained from the normalization of the diagnosis value.
